# EUROPÄISCHE PATENTSCHRIFT

(11) **EP 0 408 939 B1**
(45) Veröffentlichungstag und Bekanntmachung des Hinweises auf die Patenterteilung: **28.12.1994**
(21) Anmeldenummer: 90112274.7
(22) Anmeldetag: 27.06.1990
(51) Int. Cl.: G01N 1/22

(54) **Verfahren und Vorrichtung zur Luftprobennahme aus dem Sicherheitsbehälter eines Kernkraftwerkes**
Process and apparatus for sampling the air of the containment of a nuclear power station
Procédé et dispositif pour l'échantillonnage de l'air du confinement pour un réacteur

(30) Priorität: 27.06.1989 DE 3921051
(43) Veröffentlichungstag der Anmeldung: 23.01.1991
(73) Patentinhaber: SIEMENS AKTIENGESELLSCHAFT, 80333 München (DE)
(72) Erfinder: Werdecker, Dieter, Dr., D-8552 Höchstadt (DE); Häntsch, Hermann, D-8520 Erlangen (DE)

(56) Entgegenhaltungen:
- DD-A- 263 361
- US-A- 4 128 008

## Beschreibung

Die Erfindung bezieht sich auf ein Verfahren zur Überwachung der Aktivität der Gebäudeluft in einer kerntechnischen Anlage, insbesondere in einem Sicherheitsbehälter einer Kernkraftwerksanlage.

Die Überwachung der Aktivität der Gebäudeluft in einem Sicherheitsbehälter muß besonderen, erhöhten Anforderungen genügen: Die Aktivität bzw. die Kontamination der Gebäudeluft kann sehr niedrige Werte aufweisen; es werden jedoch auch Störfallbedingungen postuliert, bei denen die Aktivitätswerte in der Gebäudeluft sehr hohe Werte annehmen können, insbesondere können radioaktive Aerosole und Jod in der Gebäudeluft enthalten sein. Das Überwachungsverfahren nach der Erfindung soll nun sowohl bei Normalbedingungen als auch bei Störfallbedingungen präzise Meßwerte liefern, wobei bei den entnommenen, repräsentativen Gebäudeluftproben eine die Zusammensetzung des zu überwachenden Mediums verfälschende Entmischung nicht auftreten soll und auch die - bezogen auf Normalbedingungen - stark erhöhten Werte von Temperatur, relativer Luftfeuchte und Druck des Mediums die Meßergebnisse praktisch nicht verfälschen sollen.

Die Notwendgkeit der Gebäudeluftüberwachung durch Untersuchung von Luftproben ergibt sich aus den geltenden sicherheitstechnischen Anforderungen für die Auslegung der Emissionsüberwachung von Kernkraftwerken (siehe z.B. KTA 1503.2, Regelentwurfsvorlage) bzw. aufgrund der seit den TMI- und Tschernobyl-Störfällen geänderten Genehmigungspraxis bei Kernkraftwerken. Danach ist eine geeignete Probennahme Voraussetzung für die Einhaltung der geforderten kontrollierten Überwachung luftgetragener Aktivität in der Fortluft kerntechnischer Anlagen.

Aus der DD-A1-263 361 ergibt sich ein Verfahren zur Probeentnahme und Sammlung radioaktiver Stoffe aus der Containmentatmosphäre eines Kernkraftwerks unter Störfallbedingungen, insbesondere radioaktiver Aerosole und gasförmiger Jodverbindungen. Dabei wird ein Teil des in der Containmentatmosphäre enthaltenen radioaktiv kontaminierten Luft-Wasserdampf-Gas-Wassergemisches in einem ersten Kreislauf durch einen Vorratsbehälter geführt, wobei im Bypass zu diesem ersten Kreislauf ein zweiter Kreislauf an den Vorratsbehälter angeschlossen ist. Nach Durchströmung des Vorratsbehälters im ersten Kreislauf wird der Bypass hermetisch vom Containment abgetrennt und das im Vorratsbehälter enthaltene Gemisch durch den zweiten Kreislauf geschickt, in welchem es zyklisch im Umlauf eine bestimmte Zeit bzw. bis zum Erreichen der Gleichgewichtsaktivität über Aerosol- und Jodsorptionsfilter geführt wird, so daß eine Mehrfachfilterung erfolgt, wonach abschließend mittels der auf den Filtern gemessenen Aktivität und des bekannten Volumens des Vorratsbehälters die Aktivitätskonzentrationen bestimmt werden. Das Unterbrechen des Gemisch- oder Abluftstroms ist allerdings nicht von Vorteil, wenn auf eine gute Repräsentativität der entnommenen Gemischproben Wert gelegt wird. Weiterhin wird für den Meßvorgang nach dem bekannten Verfahren verhältnismäßig viel Zeit beansprucht, weil der Inhalt des Vorratsbehälters eine bestimmte Zeit durch den zweiten Kreislauf zirkulieren muß.

Der Erfindung liegt die Aufgabe zugrunde, ein Verfahren zur Überwachung der Aktivität der Gebäudeluft in einem Sicherheitsbehälter der eingangs genannten Art anzugeben, mit welchem ein präzise und reproduzierbare Aktivitätsüberwachung der Gebäudeluft sowohl unter Normal- als auch unter Störfallbedingungen vorgenommen werden kann, ohne daß komplizierte Meßbereichsumschaltungen bei der Aktivitäts-Meßstrecke und ihrer zugehörigen Meßelektronik durchgeführt werden müßten, wobei für die Durchführung des Meßvorgangs eine Unterbrechung des aus dem Sicherheitsbehälter entnommenen Gebäudeluft-Stroms nicht erforderlich sein soll.

Erfindungsgemäß wird diese Aufgabe bei einem Verfahren gemäß Präambel des Anspruchs 1 durch die folgenden, im Anspruch 1 angegebenen Verfahrensmerkmale gelöst:
a) über wenigstens eine Entnahmeleitung wird ein Zuluftstrom der zu überwachenden Gebäudeluft aus der Anlage abgesaugt und bis zu einem Meßstrecken-Abzweig transportiert,
b) über wenigstens eine Meßleitung werden am Meßstrecken-Abzweig aus dem Zuluftstrom intermittierend repräsentative Meßluftproben in Form definierter Probenvolumina entnommen, wobei über eine vom Meßstrecken-Abzweig abgehende Rückspeiseleitung der um die jeweilige Meßluftprobe verminderte Zuluftstrom in die Anlage und/oder - über eine Filterstrecke - in einen Abluftkamin geleitet wird,
c) die Entnahme der jeweiligen Meßluftprobe erfolgt mittels einer Entnahme-Armatur welche zwei Wegepaare umfaßt, wobei das eine Wegepaar der Entnahme- bzw. Rückspeiseleitung und das andere Wegepaar einer Spülfluidleitung bzw. einer Meßleitung zugeordnet ist, und wobei die Entnahme-Armatur ein bewegliches Steuerorgan umfaßt, das einen in seinem Volumen dem Probevolumen entsprechenden Durchgang aufweist;
d) zur Entnahme der jeweiligen Meßluftprobe verbindet das Steuerorgan über den Durchgang in einer I. Betriebsstellung die Entnahme- und Rückspeiseleitung und anschließend in einer II. Betriebsstellung die Spülfluidleitung und Meßleitung;
e) das im Durchgang des Steuerorgans enthaltene Probevolumen wird durch ein Spülfluid in die Meßleitung befördert;
f) in beiden Betriebsstellungen stehen die Entnahme- und die Rückspeiseleitung über einen internen Bypass der Entnahme-Armatur miteinander in Verbindung;
g) zur Anpassung an den Kontaminationsgrad des Zuluftstroms wird die Anzahl der Probennahme pro Zeiteinheit durch Verändern der Frequenz der Umschaltung von der I. in die II. Betriebsstellung, und umgekehrt, verändert.

Vorteilhafte weitere Merkmale dieses Verfahrens sind in den Ansprüchen 2 bis 4 angegeben. Danach kann als Spülfluid ein trockenes neutrales Spülgas, z.B. Stickstoff verwendet werden. Anstelle dessen oder innerhalb eines parallel geschalteten weiteren Meßstrecken-Abzweiges kann als Spülfluid auch Wasser verwendet werden. Des weiteren kann im Meßstrecken-Abzweig, und zwar alternativ oder zusätzlich, als Spülfluid Wasserdampf verwendet werden. Dieser Wasserdampf wird dann in einer der eigentlichen Meßstrecke vorgeschalteten Kondensationsstrecke bevorzugt kondensiert.

Gegenstand der Erfindung ist gemäß Gattungsbegriff des Anspruchs 5 auch eine vorteilhafte Vorrichtung, insbesondere zur Durchführung des Verfahrens nach der Erfindung, welche zur Entnahme schwach- bis hochaktiver Luftproben aus dem im Gebäude einer kerntechnischen Anlage eingeschlossenen Luftvolumen, vorzugsweise aus einem Sicherheitsbehälter einer Kernkraftwerksanlage, dient und welcher die eingangs gestellte Aufgabe gleichermaßen zugrundeliegt. Zur Lösung dieser Aufgabe umfaßt die Vorrichtung nach der Erfindung die folgenden Merkmale:
a) an das Luftvolumen ist mindestens ein Entnahmezweig angeschlossen, umfassend eine Reihenschaltung aus
   - einer Entnahmeleitung
   - einer der Entnahmeleitung nachgeschalteten Entnahme-Armatur
   - und einer der Entnahme-Armatur nachgeschalteten Rückspeiseleitung,
   wobei aus dem vom Luftvolumen über die Entnahmeleitung, die Entnahme-Armatur und die Rückspeiseleitung geleiteten Zuluftstrom mittels der Entnahme-Armatur Meßluftproben entnehmbar sind,
b) die Entnahme-Armatur weist wenigstens vier Wege auf, wobei ein Wegepaar der Entnahme- bzw. Rückspeiseleitung und ein weiteres Wegepaar einer Spülfluidleitung bzw. einer Meßleitung zugeordnet sind, und wobei die Entnahme-Armatur ein beweglichen Steuerorgan umfaßt, das einen in seinem Volumen dem Probevolumen entsprechenden Durchgang aufweist;
c) zur Entnahme einer Luftprobe verbindet das Steuerorgan über den Durchgang in einer I. Betriebsstellung die Entnahme- und Rückspeiseleitung und in einer II. Betriebsstellung die Spülfluidleitung und Meßleitung;
d) die Entnahme-Armatur umfaßt einen internen Bypass, wodurch in beiden Betriebsstellungen (I, II) die Entnahme- und die Rückspeiseleitung miteinander in Verbindung stehen;
e) die Entnahme-Armatur umfaßt des weiteren einen Antrieb für das Steuerorgan zum Verändern der Frequenz der Umschaltung von der I. in die II. Betriebsstellung, und umgekehrt, wodurch zur Anpassung an den Kontaminationsgrad des Zuluftstroms die Anzahl der Probennahme pro Zeiteinheit verändert wird.

Der interne Bypass hat den Vorteil, daß die durch die Entnahme-Armatur in der ersten Betriebsstellung strömende, zu überwachende Abluft praktisch nicht gestört wird, wenn das Stellglied in die zweite Betriebsstellung umgeschaltet wird, weil auch in dieser Betriebsstellung die Durchströmng der Armatur mit Abluft erhalten bleibt und sich so keine toten Strömungszonen ausbilden können.

Vorteilhafte Weiterbildungen der Vorrichtung nach der Erfindung sind in den Patentansprüchen 6 bis 10 angegeben. In der einfachsten Form ist das bewegliche Steuerorgan der Entnahme-Armatur ein Hahnkücken mit wenigstens einem ersten Durchgang. Dabei hat in dieser einfachen Ausführungsform ein zylindrisches Hahnküken nur einen Durchgang und die Entnahme-Armatur zwei Wegepaare, welche in zwei zueinander senkrecht stehenden, durch je einen Durchmesser des Hahnkükens verlaufenden Anschlußebenen angeordnet und mit je einer Mündung des Hahnküken-Durchganges zur Deckung bringbar sind.

Wird die Entnahme-Armatur als ein Drehschieber mit sechs Wegen und drei Durchgängen ausgebildet, dann kann die Funktion des internen Bypass zum Teil durch das Steuerorgan bzw. das Hahnküken selbst zusammen mit einem zugehörigen Wegepaar verwirklicht werden.

Die Entnahme-Armatur kann auch als ein Kolbenschieber mit wenigstens vier Wegen und demgemäß das Steuerorgan als ein Kolben mit wenigstens einem ersten Durchgang ausgebildet sein. Auch bei einem Kolbenschieber lassen sich mehr als vier Wege, z.B. sechs Wege, verwirklichen. So sieht eine günstige Ausführungsform eine Entnahme-Armatur vor, die ein Kolbenschieber mit sechs Wegen und drei Durchgängen im Kolben ist. Auch hierbei ist ein interner Bypass durch das Steuerorgan und ein zugehöriges Wegepaar zu verwirklichen.

Das Steuerorgan der Entnahme-Armatur wird in aller Regel mit einem motorischen Antrieb ausgerüstet, wobei bevorzugt bei einem Ausfall des motorischen Antriebs auch eine Handverstellung ermöglicht sein soll. Bei einer Entnahme-Armatur mit einem solchen motorischen Antrieb läßt sich vorteilhafter Weise durch die schon erwähnte Veränderung der Frequenz der Umschaltung von Betriebsstellung I in Betriebsstellung II und umgekehrt die Anzahl der Probenahmen pro Zeiteinheit in Anpassung an den Kontaminationsgrad des Zuluftstromes verändern. Bei einem hohen Kontaminationsgrad kann demgemäß die Frequenz der Probennahme verringert und der Anteil des Spülfluids vergrößert werden. Es können für extreme Störfallsituationen auch Entnahme-Armaturen mit besonders kleinem Probevolumen in Parallelzweigen bereitgehalten werden, die dann, wenn die Aktivitätswerte eine Grenze überschreiten, automatisch zur Probenahme zugeschaltet werden.

Die mit der Erfindung erzielbaren Vorteile sind vor allem in folgendem zu sehen:
- Die Probennahmemenge kann in weiten Bereichen - angefangen bei wenigen cm³ - problemlos und unter Beibehaltung der Strömungsverhältnisse variiert werden,
- eine Entmischung durch anisokinetische Entnahmen, z.B. aufgrund sich ändernder Durchsatzmengen, kann nicht auftreten,
- es werden Totvolumina, in denen unzulässige Ablagerungen sich anlagern können, vermieden (Sicherstellung der Repräsentativität),
- es wird eine sichere Trennung von Systemkomponenten mit hoher Aktivität und den Anlagenteilen des Meßzweigs durch eine mechanische Barriere gewährleistet,
- es ist der Einsatz einer nur geringen Anzahl von mechanisch/elektrisch aktiven Komponenten, z.B. Armaturen, erforderlich, so daß sich ein einfacher verfahrenstechnischer Aufbau ergibt,
- zusätzliche Meßgeräte im Probennahmestrom, wie z.B. Mengenzähler, können entfallen, da alle charakteristischen Daten durch die Randbedingungen im Probenvolumen (Druck, Volumen, Temperatur, Feuchte) definiert sind,
- im Falle der Verwendung eines neutralen, trockenen Gases bzw. trockener Luft als Spülfluid ist diese sowohl Verdünnungsluft als auch Transportmedium, Trockenluft und Temperiermedium,
- es lassen sich sehr niedrige Leckraten garantieren durch Verwendung erprobter Abdichttechniken, z.B. Stoffbuchsen und Stopfbuchsabsaugung,
- es lassen sich im Meßzweig eignungsgeprüfte Komponenten verwenden, Spezialinstrumente sind nicht erforderlich, da die Mediumbedingungen der Meßluft - nach erfolgter Aufbereitung - den spezifizierten Gerätedaten entsprechen,
- es fallen für die Hardware der Vorrichtung und bei der Durchführung des Überwachungsverfahrens vergleichsweise geringe Kosten an,
- der Nachweis der Eignung und Funktionstüchtigkeit bei den Genehmigungsbehörden ist verhältnismäßig leicht möglich, da für die Überwachungsvorrichtung weitestgehend bewährte Komponenten verwendet werden können,
- es braucht nur mit sehr geringen Aktivitätskonzentrationen umgegangen zu werden, so daß die Einhaltung der Strahlenschutz-Vorschriften problemlos sichergestellt werden kann,
- es ist die Möglichkeit der Reinigung der Überwachungsvorrichtung und insbesondere der Entnahme-Armatur auf einfache Weise gegeben, so daß ein steter Aufbau von Adsorptionszentren an der Rohrwandung vermieden werden kann (Verringerung der Austragung von z.B. Partikeln, Aerosolen),
- Taupunktunterschreitungen bei den Komponenten der Überwachungsvorrichtung lassen sich durch Aufheizung der Anlagenteile auf einfache Weise vermeiden,
- im übrigen läßt sich die Adsorption an Teilen der Überwachungsavorrichtung sehr gering halten, da diese strömungstechnisch günstig ausgelegt und aus adsorptionsabweisenden Materialien hergestellt bzw. beschichtet werden können.

Im folgenden werden Ausführungsbeispiele des Verfahrens nach der Erfindung sowie der Vorrichtung zu seiner Durchführung und weitere Details der Erfindung anhand der Zeichnung erläutert.

In der Zeichnung zeigen in zum Teil vereinfachter und schematischer Darstellung:
Figur 1 einen Entnahmezweig einer Vorrichtung nach der Erfindung, mit welcher das erfindungsgemäße Verfahren verwirklicht werden kann, in einem Übersichtsschaltbild,
Figur 2 das in Figur 1 durch gestrichelte Umrandung hervorgehobene Schaltungsdetail einer Entnahme-Vorrichtung, geringfügig abgewandelt,
Figur 3 eine Entnahme-Armatur in einem Vertikalschnitt normal zur Drehachse des beweglichen Steuerorgans,
Figur 4 den Gegenstand nach Figur 3, zum Teil in einem Horizontalschnitt durch die Drehachse des Steuerorgans,
Figur 5 den zu Figur 3 gehörenden Querschnitt durch die Entnahme-Armatur, deren Steuerorgan sich in Betriebsstellung II befindet,
Figur 6 den Gegenstand nach Figur 5, wobei sich das Steuerorgan in Betriebsstellung I (Verbindung der Zuluftmit der Abluftseite) befindet,
Figur 7 ein zweites Ausführungsbeispiel für die Entnahme-Armatur, welche sechs Wege und drei Durchgänge bzw. Durchgangskanäle aufweist, in stark vereinfachter Darstellung und in Betriebsstellung I,
Figur 8 den Gegenstand nach Figur 7 in Betriebsstellung II (Anschluß des Probennahmevolumens an die Meßstrecke),
Figur 9 eine weitere Ausführung für die Entnahme-Armatur mit einem Kolbenschieber, der sechs Wege und drei Durchgänge aufweist, in Betriebsstellung I, und
Figur 10 den Gegenstand nach Figur 9 in Betriebsstellung II (Probenentnahmevolumen mit Meßstrecke verbunden).

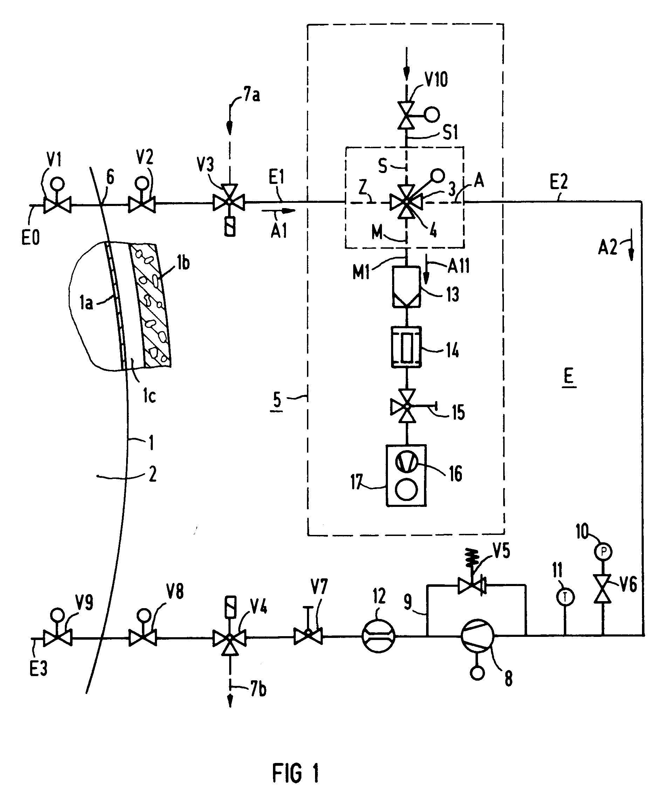

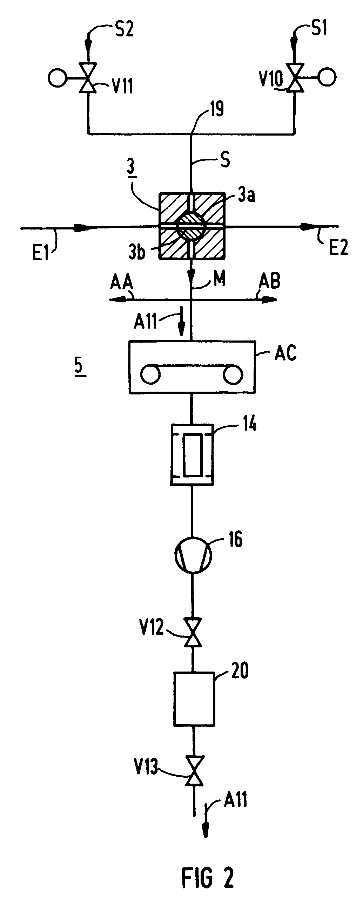

In Figur 1 ist im Ausschnitt die Kontur eines Sicherheitsbehälters 1 eines Druckwasserreaktor-Kernkraftwerks angedeutet. Dieser Sicherheitsbehälter ist kugelförmig und enthält in seinem Inneren das Containment 2, in welchem der gesamte (nicht näher dargestellte) Primärkreis des Kernkraftwerkes mit Druckwasserreaktor, Dampferzeuger, Hauptkühlmittelpumpen, Druckhalter und verbindenden Primärkreisleitungen sich befindet. Die Gebäudeluft des Containments 2 wird über nicht dargestellte Filterstrecken und einen Abluftkamin entlüftet, ebenso wie das Containment 2 über entsprechende Belüftungskanäle belüftet wird. Die über den (nicht dargestellten) Abluftkamin entweichende, gefilterte Gebäudeluft wird laufend auf ihren Kontaminationsgrad überwacht, d.h., den Abluftkamin verläßt nur solche Gebäudeluft, deren Aktivität weit unterhalb der zulässigen Grenzen liegt. Gegenstand der Erfindung ist nun eine zusätzliche Überwachung der Gebäudeluft, wie sie prinzipiell in Figur 1 dargestellt ist und die nicht nur im Normalbetrieb, sondern auch im Störfall, z.B. bei ienem postulierten Kernschmelz-Störfall, wenn die Gebäudeluft im Containment 2 hohe Aktivitäten aufweist, funktionstüchtig bleibt und präzise Meßergebnisse liefert. Hierzu ist ein als Ganzes mit E bezeichneter Entnahmezweig mit entsprechenden Rohrleitungen vorgesehen, welcher über eine Entnahmeleitung E1 einen Zuluftstrom A1 aus dem Containment 2 entnimmt und wenigstens einer Entnahme-Armatur 3 zuführt. Die Entnahme-Armatur 3 ist im Ausführungsbeispiel nach Figur 1 (und dementsprechend in den Darstellungen nach Figur 2 bis Figur 6) mit vier Wegen und zwei Betriebsstellungen I und II ausgestattet, sie sitzt im Meßstrecken-Abzweig 4, wobei das Stellglied 3a in Gestalt eines Hahnkükens zumindest einen ersten Durchgang bzw. Durchgangskanal 3b (Figuren 2 bis 6) aufweist. Über wenigstens eine Meßleitung M1 können am Meßstrecken-Abzweig 4 mittels der Entnahme-Armatur 3 von dem Zuluftstrom A1, welcher über den Weg der Entnahmeleitung E1 ankommt, repräsentative Meßluftproben A11 entnommen werden, die wesentlich kleiner sind als der Zuluftstrom A1, und der als Ganzes mit 5 bezeichneten Meßstrecke zugeführt werden. Über eine vom Meßstrecken-Abzweig 4 abgehende Rückspeiseleitung E2 wird der um die Meßluftproben A11 verminderte Zuluftstrom A1 als Abluftstrom A2 in den Sicherheitsbehälter 1 zurückgespeist. Es wäre auch möglich, diesen Abluftstrom A2 über eine Filterstrecke in einen Abluftkamin zu leiten (nicht dargestellt). Auch beides ist möglich, d.h., die dargestellte Rückleitung in das Containment 2 oder an die Abluftleitung E2 eine Filterstrecke und eine Verbindung zu einem Abluftkamin anzuschließen.

Im einzelnen durchdringt die Zuluftleitung E1 im Zuge einer Durchführung den Sicherheitsbehälter 1, der - wie als Einzelheit dargestellt - bevorzugt doppelwandig ausgebildet ist mit einer inneren, z.B. kugelförmigen, Stahldichthaut 1a, einer diesen mit Abstand umgebenden äußeren Stahlbetonwand 1b und einem dazwischenliegenden, evakuierten Zwischenraum 1c. Dieser Zwischenraum 1c wird auf Unterdruck gehalten, um eventuelle Leckagen der Stahldichthaut 1a kontrollieren zu können. Die Zuluftleitung E1, deren inneres, im Containment 2 angeordnetes Absaug-Ende mit E0 bezeichnet ist, weist zwischen diesem Absaug-Ende E0 und der Durchführung durch den Sicherheitsbehälter 1 ein erstes, bevorzugt motorgetriebenes, Absperrventil V1 auf und außerhalb des Sicherheitsbehälters 1 ein zweites, vorzugsweise motorgetriebenes Absperrventil V2. Stromabwärts dieses zweiten Ventils V2 ist eine Dreiwege-Spülarmatur V3 dargestellt, mittels welcher die Zuluftleitung E1 entweder (dargestellt) auf Durchgang geschaltet ist oder aber in einer zweiten Spülstellung das ankommende Leitungsende abgesperrt und stattdessen das abgehende Leitungsende mit der einspeisenden Spülmediumleitung 7a verbindbar ist. Gegenüberliegend ist in der Rückspeiseleitung eine entsprechende Spülarmatur V4 dargestellt, die ebenfalls als Dreiwege-Armatur ausgebildet ist und deren dritter Weg an die ausgangsseitige Spülmediumleitung 7b angeschlossen ist, so daß dann, wenn die Armatur V3 auf Spülbetrieb geschaltet ist, dies auch für Armatur V4 gilt und das Spülmedium von der ankommenden Leitung 7a über die Zuluftleitung E1, die Rückspeiseleitung E2 und das in dieser Leitung angeordnete Gebläse 8 sowie die Spülarmatur V4 in die abgehende Spülmediumleitung 7b gefördert werden kann. Bei dem Gebläse 8 handelt es sich insbesondere um einen Rotationsverdichter, in dessen Bypass 9 ein Sicherheitsventil V5 eingeschaltet ist. Im Zuge der Rückspeiseleitung E2 sind an diese über ein Ventil V6 noch eine Druckmeßstelle 10, ferner eine Temperaturmeßstelle 11 angeschlossen. In Strömungsrichtung hinter dem Gebläse 8 ist eine Meßstelle 12 für Durchflußmessung vorgesehen, anschließend (vor der Spülarmatur V4) ein Feinregulierventil V7, und analog zu den Ventilen V1, V2 der Zuluftleitung E1 sind in der Rückspeiseleitung E2 kurz vor dem Sicherheitsbehälter 1 das vorzugsweise motorgetriebene Sicherheitsventil V8 und nach der Durchführung 6 dieser Rückspeiseleitung durch die Sicherheitsbehälterwand ein weiteres vorzugsweise motorgetriebenes Sicherheitsventil V9 vorgesehen. Das Rückspeiseende der Rückspeiseleitung E2 innerhalb des Containments 2 ist mit E3 bezeichnet.

In Figur 1 ist die Meßstrecke 5 vereinfacht mit den folgenden über entsprechende Leitungsstücke in Reihe zueinander geschalteten Meßstrecken-Komponenten dargestellt: Einem Aerosolfilter 13, einem Aktivkohlefilter 14, einer Drei-Wege-Armatur 15 und einer Meßgaspumpe 16, die Bestandteil eines Kompaktgerätes 17 ist. Gegenüberliegend zur Meßleitung M1 ist die Spülfluidleitung S1 an die Entnahme-Armatur 3 angeschlossen, die von einem nicht näher dargestellten Spülfluid-Speicher versorgt wird und die mittels eines vorzugsweise motorgetriebenen Absperrventils V10 abgesperrt werden kann.

Figur 2 zeigt nähere Details zur Meßstrecke 5 sowie auch einige Ergänzungen des Schaltbildes. So ist zusätzlich zur Spülfluid- leitung S1 an diese an einem Verzweigungspunkt 19 eine Raumluftleitung S2 mit motorgetriebenen Absperrventil V11 angeschlossen. Als Spülfluid ist in diesem Beispiel Druckluft verwendet, die ein nicht dargestellter Druckluftspeicher liefert; es kann alternativ jedoch auch Raumluft als Spülfluid verwendet werden, wozu der Parallelzweig S2 dient. Das bewegliche Steuerorgan in Gestalt eines Hahnkükens 3a ist in Figur 2 in seiner I. Betriebsstellung gezeigt, in welcher die Entnahmeleitung E1 (Zuluftseite Z) über den mindestens einen inneren Durchgang 3b des Steuerorgans verbunden ist mit der Rückspeiseleitung E2 (Abluftseite A). Die Aerosolmessung ist in Figur 2 schematisch unterteilt in drei Meßzweige, die mit AA, AB und AC bezeichnet sind, von denen die Aerosolmessung AC schematisch als ein Registriergerät dargestellt ist. Zu diesen drei Meßzweigen gehört jeweils ein in Figur 2 nicht dargestelltes Aerosolfilter 13. Das nachgeschaltete Aktivkohlefilter 14 wird zugleich zur Radiojod-Messung ausgenutzt. Zusätzlich zur Meßgaspumpe 16 ist noch in Figur 2 eine Edelgas-Meßstation 20 eingezeichnet, auf deren Zuström- und auf deren Abströmseite noch je ein Ventil V12 bzw. V13 eingeschaltet sind. Der ausgewertete Strom der Meßluftproben A11 kann dann, wie es der entsprechende Pfeil andeutet, in die Entlüftungsanlage eingespeist werden, also z.B. in einen Abluftkamin, er kann aber auch in die Rückspeiseleitung E2 (Figur 1) eingeleitet und damit wieder zurück in das Containment 2 befördert werden.

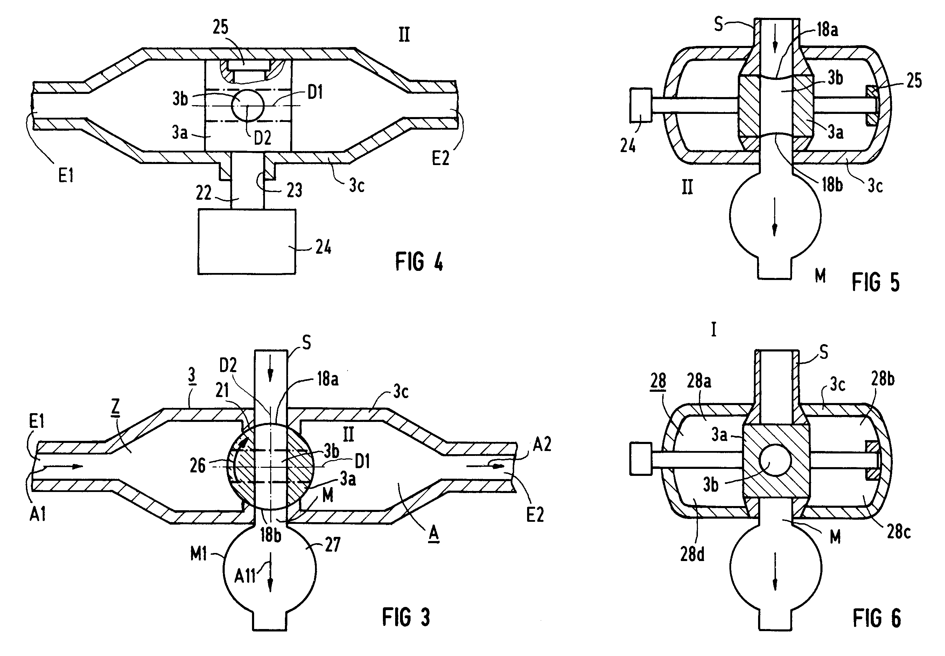

Eine geeignete Ausführungsform der Entnahme-Armatur 3 ist in Figur 3 bis 6 näher dargestellt. Generell gesprochen, hat die Entnahme-Armatur wenigstens vier Wege Z, A, S, M und wenigstens zwei Betriebsstellungen I, II des beweglichen Steuerorgans 3a. Das eine Wegepaar Z-A ist der Zuluftseite Z bzw. der Abluftseite A der Entnahme-Armatur 3 und ein weiteres Wegepaar S-M ist der Spülfluid-Seite S bzw. der Meßseite M der Entnahme-Armatur 3 zugeordnet (siehe insbesondere Figur 3). Im besonderen ist die Entnahme-Armatur 3, wie es die Figuren 3 bis 6 zeigen, ein Drehschieber mit den wenigstens vier Wegen, und das Steuerorgan 3a ist demgemäß ein Hahnküken mit wenigstens einem ersten Durchgang 3b. Wie man sieht hat das als Hahnküken ausgebildete Steuerorgan 3a einen auf einem Durchmesser liegenden Durchgang bzw. Durchgangskanal 3b, wobei die zwei Wegepaare Z-A und S-M in zwei zueinander senkrecht stehenden, durch je eine erste bzw. zweite Achse D1 bzw. D2 des Hahnkükens verlaufenden Anschlußebenen angeordnet und mit je einer Mündung 18a, 18b des Hahnküken-Durchganges 3b zur Deckung bringbar sind. Das Hahnküken ist innerhalb eines schwach konischen Dichtsitzes 21 drehbar und mit axialer Dichtpressung gelagert und selbst schwach konisch ausgeführt, wie dies von Drehschiebern an sich bekannt ist. Die Antriebswelle 22 des Hahnkükens 3a ist im Bereich der Wellendurchführung 23 durch nicht näher dargestellte Stopfbuchspackungen abgedichtet und an einen Antriebsmotor 24 angekuppelt, welcher das Hahnküken 3a in seine beiden gezeigten Betriebsstellungen I (siehe Figur 6) oder II (siehe Figur 3 bis 5) verdrehen kann. Diese Verdrehung kann entweder hin- und hergehend abwechselnd in Uhrzeiger- und in Gegenzeigerrichtung erfolgen oder aber in die gleiche Drehrichtung. Auf der der Antriebswelle 23 gegenüberliegenden Seite ist das Hahnküken 3a an einem Lager 25 drehbar und dichtend gelagert. Das Gehäuse der Entnahme- Armatur 3 ist mit 3c bezeichnet; im dargestellten Ausführungsbeispiel ist es ein im wesentlichen rechteckiger Hohlkörper mit verjüngten Enden und abgerundeten Ecken, der stetig in den Querschnitt der Entnahmeleitung E1 (Zuströmseite Z) und in den Querschnitt der Rückspeiseleitung E2 (Abluftseite A) übergeht. In Figur 3 ist der Durchgang 3b mit seinen Mündungen 18a, 18b zur Deckung gebracht mit der Spülfluid-Seite S und der Meßseite M, wobei die andere der beiden Betriebsstellungen des Durchganges 3b gestrichelt angedeutet ist. Der Richtungspfeil 26 deutet eine Möglichkeit der Motordrehrichtung an. Auf der Meßseite M ist die entsprechende Meßleitung M1 mit einer Erweiterung 27 versehen, die als Ausblasebereich zum möglichst raschen Aufnehmen des Probevolumens und der zugehörigen Spülfluid-Mengen dient.

Ebenso wie in Figur 3 ist in Figur 4 und 5 die Betriebsstellung II dargestellt, die man auch als Spülbetrieb oder als Dosierstellung bezeichnen könnte. In Figur 6 dagegen ist das Steuerorgan bzw. Hahnküken 3a mit seinem Durchgang 3b in einer Position, in welcher es die Zuluftseite Z mit der Abluftseite A verbindet, dagegen die beiden Wege S und M voneinander trennt. Wie es insbesondere Figuren 5 und 6 zeigen, hat die Entnahme-Armatur einen sogenannten internen Bypass, der durch ihren inneren Strömungsquerschnitt 28 mit den Teilquerschnitten 28a bis 28d gebildet wird. Das heißt, der Zuluftstrom A1 kann über diesen internen Bypass 28 auch in Betriebsstellung II praktisch ungehindert das bewegliche Steuerorgan bzw. Hahnküken 3a umströmen und als Abluftstrom A2 in die Rückspeiseleitung E2 übertreten. In Betriebsstellung I steht zusätzlich der Strömungsquerschnitt des Durchganges 3b zur Verfügung. Das heißt, die Strömungsverhältnisse werden durch Betätigen des Stellorgans 3a nicht oder nur unwesentlich beeinflußt, so daß die Meßluftproben A11 immer eine repräsentative Teilmenge des Zuluftstromes und damit der im Containment 2 vorhandenen Gebäudeluft sind. Wesentlich ist auch, daß durch das Volumen des Durchganges 3b zugleich das Probevolumen definiert ist, so daß man durch Veränderung der Frequenz der Umschaltung von Betriebsstellung I in Betriebsstellung II und umgekehrt, d.h. durch die Drehzahl des Antriebsmotors 24, die Anzahl der Probenahmen pro Zeiteinheit verändern kann, und zwar in Anpassung an den Kontaminationsgrad des Zuluftstromes A1. Eine weitere vorteilhafte Möglichkeit, das Probevolumen einzustellen, besteht darin, daß man mehrere Entnahme-Armaturen 3 zueinander parallel schaltet und den Durchmesser bzw. das Volumen ihrer Steuerorgan 3b verschieden groß gestaltet.

Aus den bisherigen Erläuterungen ging hervor, daß mit der dargestellten Überwachungs-Vorrichtung sich ein Verfahren zur Überwachung der Aktivität der Gebäudeluft in einer kerntechnischen Anlage, insbesondere in einem Sicherheitsbehälter eines Kernkraftwerkesanlage, verwirklichen läßt, mit den folgenden Verfahrensschritten:
a) über wenigstens eine Entnahmeleitung E1 wird ein Zuluftstrom A1 der zu überwachenden Gebäudeluft aus der Anlage 1 abgesaugt und bis zu einem Meßstrecken-Abzweig 4 transportiert,
b) über wenigstens eine Meßleitung M1 werden am Meßstrecken-Abzweig 4 aus dem Zuluftstrom A1 intermittierend repräsentative Meßluftproben A11 in Form definierter Probenvolumina entnommen, wobei über eine vom Meßstrecken-Abzweig 4 abgehende Rückspeiseleitung E2 der um die jeweilige Meßluftprobe A11 verminderte Zuluftstrom A1 in die Anlage 1 und/oder - über eine Filterstrecke - in einen Abluftkamin geleitet wird,
c) die Entnahme der jeweiligen Meßluftprobe A11 erfolgt mittels einer Entnahme-Armatur 3; 30; 300 welche zwei Wegepaare umfaßt, wobei das eine Wegepaar Z-A der Entnahme- bzw. Rückspeiseleitung E1 bzw. E2 und das andere Wegepaar S-M einer Spülfluidleitung bzw. einer Meßleitung S1 bzw. M1 zugeordnet ist, und wobei die Entnahme-Armatur 3; 30; 300 ein bewegliches Steuerorgan 3a; 3a'; 300a umfaßt, das einen in seinem Volumen dem Probevolumen entsprechenden Durchgang 3b; 3b1; w3; w6; 300b aufweist;
d) zur Entnahme der jeweiligen Meßluftprobe A11 verbindet das Steuerorgan 3a; 3a'; 300a über den Durchgang 3b; 3b1; w3; w6; 300b in einer I. Betriebsstellung die Entnahme- und Rückspeiseleitung E1, E2 und anschließend in einer II. Betriebsstellung die Spülfluidleitung S1 und Meßleitung M1;
e) das im Durchgang 3b; 3b1; w3; w6; 300b des Steuerorgans 3a; 3a'; 300a enthaltene Probevolumen wird durch ein Spülfluid in die Meßleitung M befördert;
f) in beiden Betriebsstellungen I, II stehen die Entnahme- und die Rückspeiseleitung E1, E2 über einen internen Bypass 28; w1, 3b2, w2; 31 der Entnahme-Armatur 3; 30; 300 miteinander in Verbindung;
g) zur Anpassung an den Kontaminationsgrad des Zuluftstroms A1 wird die Anzahl der Probennahme pro Zeiteinheit durch Verändern der Frequenz der Umschaltung von der I. in die II. Betriebsstellung, und umgekehrt, verändert.

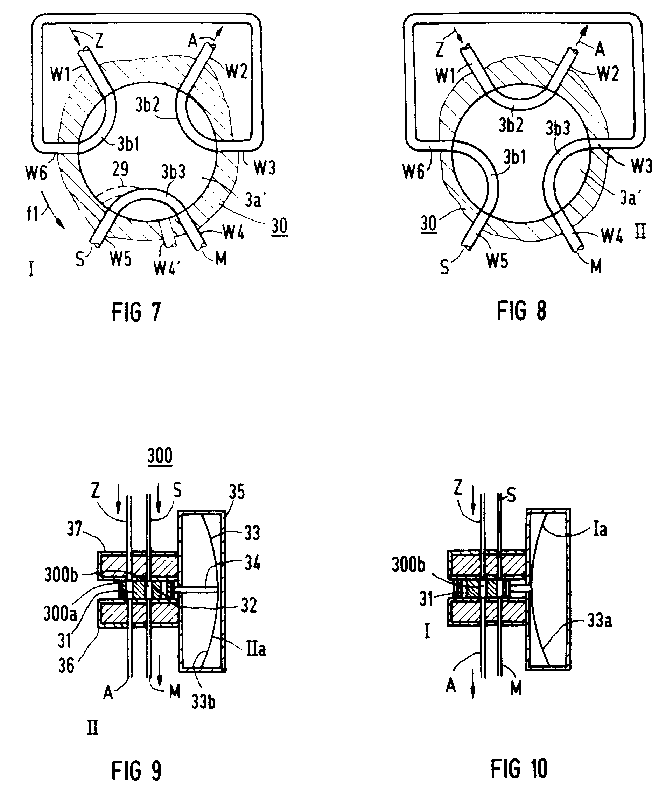

Figur 7 und 8 zeigen ein zweites Ausführungsbeispiel für die Entnahme-Armatur 30 in stark vereinfachter Darstellung. Hierbei ist die Entnahme-Armatur als ein Drehschieber mit sechs Wegen W1 bis W6 und mit drei Durchgängen 3b1, 3b2 und 3b3 ausgeführt. In der in Figur 7 dargestellten I. Betriebsstellung sind zwei Wegepaare, nämlich W1-W2 und W3-W6, in Reihe zueinander zwischen der Zuluft- und der Abluftseite Z bzw. A eingeschaltet, und ein einziges Wegepaar W4-W5 ist zwischen Spülfluidseite S und Meßseite M eingeschaltet. In der in Figur 8 dargestellten II. Betriebsstellung bleibt das erste Wegepaar W1-W2 der zwei Wegepaare W1-W2, W3-W6 zwischen der Zuluftseite Z und der Abluftseite A eingeschaltet, und das zweite Wegepaar W3-W6 der zwei Wegepaare und das einzelne Wegepaar W4-W5 sind in Reihe zueinander aufgrund der mit ihnen zusammenarbeitenden Durchgänge 3b1, 3b3 in Reihe zueinander zwischen Spülfluid-Seite S und MeßSeite M eingeschaltet. Wie es der Richtungspfeil f1 verdeutlicht, ist das Stellglied 3a' aus der Betriebsstellung I nach Figur 7 durch Drehung in Gegenzeigerrichtung f1 um einen Winkel von ca. 60° in die Betriebsstellung II nach Figur 8 verdreht worden. Bei diesem Ausführungsbeispiel ist der interne Bypass bereits durch das Steuerorgan bzw. Hahnküken 3a' verwirklicht, da ja in Betriebsstellung II durch den Durchgang 3b2 eine Verbindung zwischen Zu- und Abluftseite hergestellt ist. Es ist jedoch zweckmäßig, zusätzlich zu diesem kleinen internen Bypass noch einen größeren vorzusehen, wie anhand der Figur 6 erläutert, um die Zu- und Abluftströmung möglichst wenig zu beeinflussen.

Soll die Verbindung der Spülfluidseite S mit der Meßseite M in Stellung I durch das Steuerorgan 3a' unterbrochen sein, dann kann, wie gestrichelt angedeutet, der Durchgang 3b3 in Form eines Kanalteils 29 auf einem etwas größeren Umfangswinkel verlegt werden, so daß in Betriebsstellung I keine Verbindung zwischen Spülfluidseite S und Meßseite M gegeben ist. Diese ist aber erwünschterweise dann in Betriebsstellung II gegeben, wenn man den Weg W4 für die Meßseite M um ein entsprechendes Umfangswinkelstück zum Weg W4' verlagert. In diesem Falle würde dann durch den Durchgang 3b3 in Stellung II (Figur 8) wieder eine Durchverbindung zwischen W3 und W4' bestehen.

In Figuren 9 und 10 ist ein drittes grundsätzliches Ausführungsbeispiel dargestellt, wonach die Entnahme-Armatur 300 ein Kolbenschieber mit wenigstens vier Wegen Z, A, S, M und das Steuerorgan demgemäß ein Kolben 300a mit wenigstens einem ersten Durchgang 300b ist. Für die grundsätzliche Funktion ist in der Tat nur dieser eine erste Durchgang 300b erforderlich, die weiteren beiden Durchgänge 31 und 32 werden weiter unten beschrieben. Der Antrieb des Kolbens 300a ist ein pneumatischer mit einer Membran 33 und einem Membranstößel 34, wobei die Membran 33 innerhalb ihres Gehäuses 35 entsprechend den Betriebsstellungen I (Figur 10) oder II (Figur 9) ebenfalls zwei Positionen einnehmen kann: In Position Ia ist die äußere Seite 33a der Membran 33 mit Druckluft (über nicht näher dargestellte Druckluftleitungen) beaufschlagt und wölbt sich daher nach innen; sie schiebt mit ihrem Stößel 34 den Kolben 300a in die dargestellte Position I, in welcher der erste Durchgang 300b die Zuluftseite Z mit der Abluftseite A verbindet. In Membranposition IIa ist die andere Membranseite 33b mit Druckluft (über nicht dargestellte Leitungen) beaufschlagt, die andere Membranseite 33a ist entlüftet, so daß sich die Membran 33 nach außen wölbt und mit ihrem Stößel 34 den Kolben 300a in die Position II verlagert, in welcher der Durchgang 300b nun die Spülfluidseite S mit der Meßseite M verbindet. Diese grundsätzliche Funktion läßt sich bereits mit einem einzigen (ersten) Durchgang 300b verwirklichen. Wie man sieht, hat der zusätzliche zweite Durchgang 31 die Aufgabe, in Position II, wenn also das Probenvolumen in die Meßstrecke befördert wird, eine Verbindung zwischen der Zuluftseite Z und der Abluftseite A aufrechtzuerhalten, dieser zweite Durchgang 31 stellt damit einen internen Bypass dar. Der dritte Durchgang 32, welcher dann nicht erforderlich ist, wenn in Position I kein Spülfluid in die Meßstrecke gelangen soll, liegt in Betriebsstellung II (Figur 9) tot und ist in Betriebsstellung I (Figur 10) in den Weg zwischen der Spülfluidseite S und der Meßseite M eingeschaltet.

Wie anhand der alternativen Ausführung in Figur 7 mit der Kanalabzweigung 29 und dem Weg w4' bereits erläutert, kann die Aufrechterhaltung des Spülfluidstromes in Betriebsstellung I entfallen, insbesondere dann, wenn keine hohe Aktivität in der überwachten Gebäudeluft vorhanden ist. Die Aufrechterhaltung des Spülfluidstromes in Betriebsstellung I kann aber bei größeren Aktivitäten in der Gebäudeluft zweckmäßig sein, weil dann der Meßgasstrom definiert verdünnt wird.

Auch für die Kolbenschieberausführung nach Figuren 9 und 10 gilt, daß durch den Antrieb des Kolbens 300a die Frequenz der Umschaltung von Betriebsstellung I in Betriebsstellung II und umgekehrt verändert werden kann und damit die Anzahl der Probennahmen pro Zeiteinheit an den Kontaminationsgrad des Zuluftstromes angepaßt werden kann. Mit 37 ist in Figur 9 und 10 noch ein zylindrisches Gehäuse für den Kolben 300a, das zugleich als Kolbenführung dient, bezeichnet.

Sowohl Drehschieber- als auch Kolbenschieber-Armaturen sind in der Prozeßanalytik grundsätzlich bekannt, vergleiche "Ullmann's Encyklopädie der technischen Chemie, Band 5, Analysen- und Meßverfahren", Seiten 922 und 923.

Die Erfindung ist nicht nur für die Gebäudeluftüberwachung in Druckwasserreaktor-Kernkraftwerken, sondern auch bei Siedewasser- oder Schwerwasser-Reaktoranlagen einsatzfähig, desgleichen bei kerntechnischen Anlagen allgemein, wie z.B. bei Brennelement- Lagern. Sie ist auch mit Vorteil dort anwendbar, wo die Einrichtungen zur Überwachung des Kontaminationsgrades der Gebäudeluft auf unterschiedliche Verschmutzungs- bzw. Kontaminationsgrade schnellstmöglich reagieren muß, ohne daß eine Verfälschung des Meßergebnisses eintritt.

## Patentansprüche

1. Verfahren zur Überwachung der Aktivität der Gebäudeluft in einer kerntechnischen Anlage, insbesondere in einem Sicherheitsbehälter einer Kernkraftwerksanlage, mit den folgenden Merkmalen:
a) über wenigstens eine Entnahmeleitung (E1) wird ein Zuluftstrom (A1) der zu überwachenden Gebäudeluft aus der Anlage (1) abgesaugt und bis zu einem Meßstrecken Abzweig (4) transportiert,
b) über wenigstens eine Meßleitung (M1) werden am Meßstrecken-Abzweig (4) aus dem Zuluftstrom (A1) intermittierend repräsentative Meßluftproben (A11) in Form definierter Probenvolumina entnommen, wobei über eine vom Meßstrecken-Abzweig (4) abgehende Rückspeiseleitung (E2) der um die jeweilige Meßluftprobe (A11) verminderte Zuluftstrom (A1) in die Anlage (1) und/oder - über eine Filterstrecke - in einen Abluftkamin geleitet wird,
c) die Entnahme der jeweiligen Meßluftprobe (A11) erfolgt mittels einer Entnahme-Armatur (3; 30; 300) welche zwei Wegepaare umfaßt, wobei das eine Wegepaar (Z-A) der Entnahme- bzw. Rückspeiseleitung (E1 bzw. E2) und das andere Wegepaar (S-M) einer Spülfluidleitung bzw. einer Meßleitung (S1 bzw. M1) zugeordnet ist, und wobei die Entnahme-Armatur (3; 30; 300) ein bewegliches Steuerorgan (3a; 3a'; 300a) umfaßt, das einen in seinem Volumen dem Probevolumen entsprechenden Durchgang (3b; 3b1; w3; w6; 300b) aufweist;
d) zur Entnahme der jeweiligen Meßluftprobe (A11) verbindet das Steuerorgan (3a; 3a'; 300a) über den Durchgang (3b; 3b1; w3; w6; 300b) in einer I. Betriebsstellung die Entnahme- und Rückspeiseleitung (E1, E2) und anschließend in einer II. Betriebsstellung die Spülfluidleitung (S1) und Meßleitung (M1);
e) das im Durchgang (3b; 3b1; w3; w6; 300b) des Steuerorgans (3a; 3a'; 300a) enthaltene Probevolumen wird durch ein Spülfluid in die Meßleitung (M) befördert;
f) in beiden Betriebsstellungen (I, II) stehen die Entnahme- und die Rückspeiseleitung (E1, E2) über einen internen Bypass (28; w1, 3b2, w2; 31) der Entnahme-Armatur (3; 30; 300) miteinander in Verbindung;
g) zur Anpassung an den Kontaminationsgrad des Zuluftstroms (A1) wird die Anzahl der Probennahme pro Zeiteinheit durch Verändern der Frequenz der Umschaltung von der I. in die II. Betriebsstellung, und umgekehrt, verändert.

2. Verfahren nach Anspruch 1, mit dem weiteren Merkmal, daß ein trockenes neutrales Spülgas, z.B. Stickstoff, als Spülfluid verwendet wird.

3. Verfahren nach Anspruch 1, mit dem weiteren Merkmal, daß als Spülfluid Wasser verwendet wird.

4. Verfahren nach Anspruch 1, mit dem weiteren Merkmal, daß als Spülfluid Wasserdampf verwendet wird.

5. Vorrichtung, insbesondere zur Durchführung des Verfahrens nach einem der Ansprüche 1 bis 4, zur Entnahme schwach- bis hochaktiver Luftproben aus dem im Gebäude einer kerntechnischen Anlage eingeschlossenen Luftvolumen, vorzugsweise aus einem Sicherheitsbehälter (1) einer Kernkraftwerksanlage, mit den folgenden Merkmalen:
a) an das Luftvolumen ist mindestens ein Entnahmezweig (E) angeschlossen, umfassend eine Reihenschaltung aus
- einer Entnahmeleitung (E1),
- einer der Entnahmeleitung (E1) nachgeschalteten Entnahme-Armatur (3; 30; 300)
- und einer der Entnahme-Armatur (3; 30; 300) nachgeschalteten Rückspeiseleitung (E2),
wobei aus dem vom Luftvolumen über die Entnahmeleitung (E1), die Entnahme-Armatur (3; 30; 300) und die Rückspeiseleitung (e2) geleiteten Zuluftstrom (A1) mittels der Entnahme-Armatur (3; 30; 300) Meßluftproben (A11) entnehmbar sind,
b) die Entnahme-Armatur (3; 30; 300) weist wenigstens vier Wege (Z, A, S, M) auf, wobei ein Wegepaar (Z-A) der Entnahme- bzw. Rückspeiseleitung (E1 bzw. E2) und ein weiteres Wegepaar (S-M) einer Spülfluidleitung (S1) bzw. einer Meßleitung (M1) zugeordnet sind, und wobei die Entnahme-Armatur (3; 30; 300) ein beweglichen Steuerorgan (3a; 3a'; 300a) umfaßt, das einen in seinem Volumen dem Probevolumen entsprechenden Durchgang (3b; 3b1; w3, w6; 300b) aufweist;
c) zur Entnahme einer Luftprobe (A11) verbindet das Steuerorgan (3a; 3a'; 300a) über den Durchgang (3b; 3b1, w3, w6, 300b) in einer I. Betriebsstellung die Entnahme- und Rückspeiseleitung (E1, E2) und in einer II.- Betriebsstellung die Spülfluidleitung (S1) und Meßleitung (M1);
d) die Entnahme-Armatur (3; 30; 300) umfaßt einen internen Bypass (28; w1; 3b2, w2, 31), wodurch in beiden Betriebsstellungen (I, II) die Entnahme- und die Rückspeiseleitung (E1, E2) miteinander in Verbindung stehen;
e) die Entnahme-Armatur (3; 30; 300) umfaßt des weiteren einen Antrieb für das Steuerorgan (3a; 3a'; 300a) zum Verändern der Frequenz der Umschaltung von der I. in die II. Betriebsstellung, und umgekehrt, wodurch zur Anpassung an den Kontaminationsgrad des Zuluftstroms (A1) die Anzahl der Probennahme pro Zeiteinheit verändert wird.

6. Vorrichtung nach Anspruch 5, mit dem Merkmal, daß das Steuerorgan (3a; 3a') der Entnahme-Armatur (3; 30) ein Hahnküken mit wenigstens einem ersten Durchgang (3b; 3b1) ist.

7. Vorrichtung nach Anspruch 6, mit dem Merkmal eines zylindrischen Hahnkükens (3a) mit einem Durchgang (3b) und zwei Wegepaaren (Z-A, S-M) der Entnahme-Armatur (3), die in zwei zueinander senkrecht stehenden, durch je einen Durchmesser des Hahnkükens (3a) verlaufenden Anschlußebenen angeordnet und mit je einer Mündung (18a, 18b) des Hahnküken-Durchganges (3b) zur Deckung bringbar sind.

8. Vorrichtung nach einem der Ansprüche 5 oder 6, mit dem Merkmal, daß die Entnahme-Armatur (30) ein Drehschieber mit sechs Wegen (W1 - W6) ist und ein Steuerorgan (3a') mit drei Durchgängen (3b1, 3b2, 3b3) aufweist, wobei in der I. Betriebsstellung zwei Wegepaare (W1-W2, W3-W6) in Reihe zueinander zwischen der Zuluft- und der Abluftseite (Z, A) und ein einziges Wegepaar (W4-W5) zwischen Spülfluid- und Meßseite (S, M) eingeschaltet sind und wobei in der II. Betriebsstellung das erste (W1-W2) der zwei Wegepaare zwischen Zuluft- und Abluftseite (Z, A) eingeschaltet bleibt sowie das zweite (W3-W6) der zwei Wegepaare und das einzelne Wegepaar (W4-W5) in Reihe zueinander zwischen Spülfluid- und Meßseite (S, M) eingeschaltet sind.

9. Vorrichtung nach Anspruch 5, mit dem Merkmal, daß die Entnahme-Armatur ein Kolbenschieber mit wenigstens vier Wegen (Z, A, S, M) und das Steuerorgan demgemäß ein Kolben (300a) mit wenigstens einem ersten Durchgang (300b) ist.

10. Vorrichtung nach Anspruch 5 oder 9, mit dem Merkmal, daß die Entnahme-Armatur ein Kolbenschieber mit vier Wegen und drei Durchgängen (300b, 31, 32) im Kolben ist, wobei in der I. Betriebsstellung ein erster Durchgang (300b) die Zuluft- und die Abluftseite (Z, A) und ein zweiter Durchgang (32) die Spülfluid- und die Meßseite (S-M) miteinander verbinden und in einer II. Betriebsstellung der erste, das Probevolumen bildende Durchgang (300b) die Spülfluid- und die Meßseite (S-M) miteinander verbindet, der zweite Durchgang (32) totgelegt ist und ein dritter Durchgang (31), der in der I. Betriebsstellung totgelegt war, die Zuluftmit der Abluftseite (Z-A) verbindet.

## Claims

1. Process for monitoring the activity of the containment air in a nuclear installation, in particular, in a containment of a nuclear power station, having the following characteristics:
a) an airflow (A1) of the containment air which is to be monitored is extracted from the installation (1) by suction through one or more extraction lines (E1) and delivered to a metering section branch (4),
b) at the metering section branch (4), representative measurement air samples (A11) are intermittently extracted from the delivered air flow (A1), in the form defined sample volumes, through one or more metering lines (M1), the delivered airflow (A1), reduced by each separate measurement air sample (A11), being delivered into the installation (1) through a return line (E2) which runs from the metering section branch (4) and/or into an exhaust air chamber, through a filter section,
c) each measurement air sample (A11) is extracted by means of an extraction fitting (3; 30; 300) which comprises two path pairs, one of the path pairs (Z-A) being assigned to the extraction or return line (E1 or E2) and the other path pair (S-M) being assigned to a flushing fluid line or metering line (S1 OR M1), and the extraction fitting (3; 30; 300) comprising a moving control element (3a; 3a'; 300a) which possesses a passage (3b; 3b1; w3; w6; 300b) having a capacity equal to the sample volume;
d) for the purpose of extraction of each of the measurement air samples (A11), the control element (3a; 3a'; 300a) connects, through the passage (3b; 3b1; w3; w6; 300b), the extraction and return lines (E1, E2) in a first operating position (I) and then, in a second operating position (II), connects the flushing fluid line (S1) and the metering line (M1);
e) the sample volume contained within the passage (3b; 3b1; w3; w6; 300b) of the control element (3a; 3a'; 300a) is conveyed into the metering line (M) through a flushing fluid;
f) in both operating positions (I, II), the extraction and return lines (E1, E2) are connected to each other through an internal bypass (28, w1, 3b2, w2; 31) of the extraction fitting (3; 30; 300);
g) for the purpose of adaptation to the degree of contamination of the delivered airflow (A1), the number of samples taken per unit of time are altered by alteration of the frequency of the changeover from the operating position I to the operating position II, and the reverse.

2. Process according to Claim 1, having the additional characteristic that a dry, neutral, flushing gas, e.g. nitrogen, is used as a flushing fluid.

3. Process according to Claim 1, having the additional characteristic that water is used as a flushing fluid.

4. Process according to Claim 1, having the additional characteristic that water vapour is used as a flushing fluid.

5. Apparatus, in particular, for implementation of the process according to any one of Claims 1 to 4, for the extraction of low-level to high-level active air samples from the air volume enclosed within the containment of a nuclear installation, preferably from a containment (1) of a nuclear power station, having the following characteristics :
a) connected to the air volume are one or more extraction branches (E), comprising a series connection of
- an extraction line (E1)
- an extraction fitting (3; 30; 300), connected after the extraction line (E1)
- and a return line (E2), connected after the extraction fitting (3; 30; 300), measurement air samples (A11) being extractable, by means of the extraction fitting (3; 30; 300), from the airflow (A1) delivered from the air volume through the extraction line (E1), the extraction fitting (3; 30; 300) and the return line (E2),
b) the extraction fitting (3; 30; 300) possesses four or more paths (Z, A, S, M), one path pair (Z-A) being assigned to the extraction and return line (E1 and E2) and another path pair (S-M) being assigned to a flushing fluid line (S1) and a metering line (M1), and the extraction fitting (3; 30; 300) comprising a moving control element (3a; 3a'; 300a) which possesses a passage (3b; 3b1; w3, w6; 300b) having a capacity equal to the sample volume;
c) for the purpose of extraction of an air sample (A11), the control element (3a; 3a'; 300a) connects, through the passage (3b; 3b1; w3; w6; 300b), the extraction and return lines (E1, E2) in a first operating position (I) and, in a second operating position (II), connects the flushing fluid line (S1) and the metering line (M1);
d) the extraction fitting (3; 30; 300) comprises an internal bypass (28; w1; 3b2, w2, 31) by means of which the extraction line and the return line (E1, E2) are connected to each other in both operating positions (I, II);
e) the extraction fitting (3; 30; 300) further comprises a drive for the control element (3a; 3a'; 300a) for the purpose of altering the frequency of the changeover from the operating position I to the operating position II, and the reverse, whereby the number of samples taken per unit of time is altered for the purpose of adaptation to the degree of contamination of the delivered airflow (A1).

6. Apparatus according to Claim 5, having the characteristic that the control element (3a; 3a') of the extraction fitting (3; 30) is a cock plug with one or more first passages (3b; 3b1).

7. Apparatus according to Claim 6, having the characteristic of a cylindrical cock plug (3a) with a passage (3b) and two path pairs (Z-A, S-M) of the extraction fitting (3), which are located in two connection planes which are perpendicular to each other, each passing through one diameter of the cock plug (3a), and each coinciding with an opening (18a, 18b) of the cock plug passage (3b).

8. Apparatus according to either of Claims 5 or 6, having the characteristic that the extraction fitting (30) possesses a rotary slide valve with six paths (W1 - W6) and a control element (3a') with three paths (3b1, 3b2, 3b3) whereby, in the operating position I, two path pairs (W1-W2, W3-W6) are connected in series with each other between the delivery air end and the exhaust air end (Z, A) and a single path pair (W4-W5) is connected between the flushing fluid end and the metering end (S, M) and, in the operating position II, the first (W1-W2) of the two path pairs remains connected between the delivery air end and the exhaust air end (Z, A) and the second (W3-W6) of the two path pairs and the single path pair (W4-W5) are connected in series with each other between the flushing fluid end and the metering end (S, M).

9. Apparatus according to Claim 5, having the characteristic that the extraction fitting is a piston slide valve with four or more paths (Z, A, S, M) and that, accordingly, the control element is a piston (300a) with one or more first passages (300b).

10. Apparatus according to either of Claims 5 or 9, having the characteristic that the extraction fitting is a piston slide valve with four paths and three passages (300b, 31, 32) within the piston whereby, in the operating position I, a first passage (300b) connects the delivery air end and the exhaust air end (Z, A) and a second passage (32) connects the flushing fluid end and the metering end (S-M) and, in the operating position II, the first passage (300b), which constitutes the sample volume, connects the flushing fluid end and the metering end (S-M), the second passage (32) is shut off and a third passage (31), which was shut off in the operating position I, connects the delivery air end with the exhaust air end (Z-A).

## Revendications

1. Procédé de surveillance de l'activité de l'air du bâtiment d'une installation de génie nucléaire, notamment dans une enceinte de confinement d'une centrale nucléaire, caractérisé en ce que :
a) un courant affluent (A1) de l'air du bâtiment à surveiller est aspiré de l'installation (1) par l'intermédiaire d'au moins une conduite de prélèvement (E1), et est acheminé jusqu'à une dérivation (4) d'un circuit de mesure;
b) par l'intermédiaire d'au moins une conduite de mesure (M1), on prélève par intermittence, au niveau de la dérivation (4) du circuit de mesure, dans le courant affluent (A1), des échantillons d'air à mesurer (A11) représentatifs sous forme de volumes d'échantillon définis, un conduit de retour (E2) qui part de la dérivation (4) du circuit de mesure permettant de renvoyer le courant affluent (A1), diminué de l'échantillon d'air (A11) de mesure, a l'installation (1) et/ou - par un circuit de filtration - à une cheminée d'évacuation de l'air;
c) le prélèvement des échantillons d'air à mesurer (A11) se fait au moyen d'un robinet de prélèvement (3;30;300) qui comporte deux couples de voies, le premier couple de voies (Z-A) étant associée aux conduites de prélèvement et de retour (E1 et E2), et le second (S-M) à une conduite de fluide de lavage et à une conduite de mesure (S1 et M1), le robinet de prélèvement (3;30;300) comprenant également un organe de commande mobile (3a;3a';300a) qui présente un passage (3b;3b1;w3;w6;300b) de volume correspondant au volume de l'échantillon;
d) pour le prélèvement des échantillons d'air à mesurer (A11), l'organe de commande (3a;3a';300a), par l'intermédiaire du passage (3b;3b1;w3;w6;300b), met en communication, dans une première position de fonctionnement I, les conduites de prélèvement et de retour (E1,E2), puis dans une deuxième position de fonctionnement II, les conduites de fluide de lavage (S1) et de mesure (M1);
e) le volume d'échantillonnage contenu dans le passage (3b; 3b1;w3;w6;300b) de l'organe de commande (3a;3a';300a) est entraîné par un fluide de lavage dans la conduite de mesure (M);
f) dans les deux positions de fonctionnement (I, II), les conduites de mesure et de retour (E1, E2) sont reliées l'une à l'autre par une dérivation interne (28;w1,3b2,w2;31) du robinet de prélèvement (3;30;300);
g) l'adaptation au niveau de contamination du courant affluent (A11) se fait en modifiant le nombre de prélèvements d'échantillon par unité de temps, en modifiant la fréquence de commutation de la première à la deuxième position de fonctionnement, et inversement.

2. Procédé selon la revendication 1, caractérisé en ce que le fluide de lavage utilisé est un gaz de lavage sec et neutre, par exemple de l'azote.

3. Procédé selon la revendication 1, caractérisé en ce que le fluide de lavage utilisé est de l'eau.

4. Procédé selon la revendication 1, caractérisé en ce que le fluide de lavage utilisé est de la vapeur d'eau.

5. Dispositif destiné notamment à la mise en oeuvre du procédé selon l'une des revendications 1 à 4, pour prélever des échantillons d'air à activité faible à forte du volume d'air enfermé dans le bâtiment d'un réacteur nucléaire, de préférence de l'enceinte de confinement (1) d'une centrale nucléaire, caractérisé en ce que :
a) au volume d'air est raccordé au moins un embranchement de prélèvement (E), qui comprend en série
- une conduite de prélèvement (E1),
- un robinet de prélèvement (3;30;300) en aval de la conduite de prélèvement (E1),
- et une conduite de retour (E2) en aval du robinet de prélèvement (3;30;300),
des échantillons d'air à mesurer (A11) pouvant être prélevés, au moyen du robinet de prélèvement (3;30;300), du courant affluent (A1) amené du volume d'air par la conduite de prélèvement (E1), le robinet de prélèvement (3;30;300) et la conduite de retour (E2),
b) le robinet de prélèvement (3;30;300) comporte au moins quatre voies (Z, A, S, M), deux voies (Z-A) étant associées aux conduites de prélèvement et de retour (E1 et E2) et deux autres voies aux conduites de fluide de lavage (S1) et de mesure (M1), le robinet de prélèvement comprenant également un organe de commande mobile (3a;3a';300a) qui présente un passage (3b;3b1; w3;w6;300b) de volume correspondant au volume de l'échantillon;
c) pour le prélèvement d'un échantillon d'air (A11), l'organe de commande (3a;3a';300a), par l'intermédiaire du passage (3b;3b1; w3;w6;300b), met en communication, dans une première position de fonctionnement I, les conduites de prélèvement et de retour (E1,E2), et dans une deuxième position de fonctionnement II, les conduites de fluide de lavage (S1) et de mesure (M1);
d) le robinet de prélèvement (3;30;300) comprend une dérivation interne (28;w1,3b2,w2;31), les conduites de mesure et de retour (E1, E2) étant ainsi reliées l'une à l'autre dans les deux positions de fonctionnement (I, II);
e) le robinet de prélèvement (3;30;300) comprend de plus un entraînement pour l'organe de commande (3a;3a';300a) permettant de modifier la fréquence de commutation de la première à la deuxième position de fonctionnement, et inversement, le nombre de prélèvements par unité de temps étant ainsi modifié pour s'adapter au niveau de contamination du courant affluent (A1).

6. Dispositif selon la revendication 5, caractérisé en ce que l'organe de commande (3a;3a') du robinet de prélèvement (3;30) est un boisseau de robinet ayant au moins un premier passage (3b;3b1).

7. Dispositif selon la revendication 6, caractérisé en ce que le boisseau du robinet de prélèvement (3) est un boisseau de robinet cylindrique (3a) ayant un passage (3b) et deux couples de voies (Z-A, S-M), lesquels sont chacun dans deux plans de raccordement perpendiculaires entre eux et passant chacun par un diamètre du boisseau (3a), les deux couples de voies pouvant être placées en coïncident chacun par l'intermédiaire d'une embouchure (18a, 18b) du passage de boisseau (3b).

8. Dispositif selon l'une des revendications 5 ou 6, caractérisé en ce que le robinet de prélèvement (30) comporte un tiroir rotatif à six voies (W1-W6) et un organe de commande (3a') ayant trois passages (3b1,3b2,3b3), la première position de fonctionnement (I) étant celle dans laquelle deux couples de voies (W1-W2, W3-W6) sont raccordés en série l'un à l'autre entre les côtés arrivée et retour (Z,A) et un seul couple de voie (W4-W5) relie les conduites de fluide de lavage et de mesure (S,M), et la deuxième position de fonctionnement (II) étant celle dans laquelle le premier (W1-W2) des deux couples de voies entre les côtés arrivée et retour de l'air (Z,A) reste branchés, tandis que le deuxième (W3-W6) des deux couples de voies et le couple unique de voie (W4-W5) sont branchés en série l'un à l'autre entre les conduites de fluide de lavage et de mesure (S,M).

9. Dispositif selon la revendication 5, caractérisé en ce que le robinet de prélèvement est un tiroir à piston ayant au moins quatre voies (Z, A, S, M) et l'organe de commande est en conséquence un piston (300a) ayant au moins un premier passage (300b).

10. Dispositif selon la revendication 5 ou la revendication 9, caractérisé en ce que le robinet de prélèvement est un tiroir à piston ayant quatre voies et trois passages dans le piston (300b,31,32), la première position de fonctionnement (I) étant celle dans laquelle un premier passage (300b) relie entre elles les côtés arrivée et retour d'air (Z,A) et un deuxième passage relie entre elles les conduites de fluide de lavage et de mesure (S-M), et une deuxième position de fonctionnement (II) étant celle dans laquelle le passage (300b) définissant le volume d'échantillonnage relie entre elles les conduites de fluide de lavage et de mesure (S-M), le deuxième passage est inactif et un troisième passage (31), qui était inactif dans la première position de fonctionnement, relie le côté arrivée au côté retour d'air(Z-A).
